# EUROPEAN PATENT SPECIFICATION

(11) **EP 1 362 622 B1**
(45) Date of publication and mention of the grant of the patent: **14.12.2005**
(21) Application number: 03253040.4
(22) Date of filing: 15.05.2003
(51) Int. Cl.: A63F 13/10

(54) **Video game apparatus and control method thereof**
Videospiel und Steuerverfahren dafür
Jeu video et méthode de contrôle

(30) Priority: 17.05.2002 JP 2002143542
(43) Date of publication of application: 19.11.2003
(60) Divisional application: 05101959.4
(73) Proprietor: Nintendo Co., Limited, Kyoto-shi, Kyoto (JP)
(72) Inventor: Koizumi, Yoshiaki, Nintendo Co. Ltd., Kyoto-shi, Kyoto (JP); Hayashida, Koichi, Nintendo Co. Ltd., Kyoto-shi, Kyoto (JP); Hayakawa, Takeshi, Nintendo Co. Ltd., Kyoto-shi, Kyoto (JP)
(74) Representative: Perkins, Sarah

(56) References cited:
- US-B1- 6 347 994

## Description

### BACKGROUND OF THE INVENTION

### Field of the invention

The present invention relates to a video game apparatus and a control method thereof, and a game program. More specifically, the present invention relates to a novel video game apparatus and a control method thereof, and a game program utilized therefore for erasing an area (hereinafter, called as "action restriction area") in which an action of a player character is restricted or the player character is damaged in a game that a game player operates the player character in a virtual 3-dimension game space.

### Description of the prior art

US 6 347 994 describes a 2-dimensional game scenario in which player movement onto certain areas of a grid environment is restricted.

By recent development of computer graphics, a game apparatus in which a virtual 3-dimension game space is set and in which a game player plays a game by operating a player character is provided in various ways and has a high processing speed and an ascetically pleasant image.

2. An article in "Game Programming Gems" ed. Mark De Loura, Charles River Media, Inc. (2000), describes a technique by which movement through a 3-dimensional game environment can be simplified by representing the movement across a 2-dimensional mesh network.

More specifically, paste of a texture to a 3-dimension object has been performed for the purpose of pursuit of a reality. In order to enhance presence of the game and improving reality of the racing game, an art for representing a locus passed by a racing car on a racing course, representing a change by pasting a smudged texture with increasing orbits of the racing car and by erasing the texture with the passage of time is known (e.g., Japanese Patent Application Laying-open No. 2001-167291).

However, in the prior art, high performance of a recent game apparatus is focused on pursuit of reality and not focused on realizing an interest of a game itself.

### SUMMARY OF THE INVENTION

Therefore, it is a primary object of the present invention to provide a novel video game apparatus and a control method thereof, and a game program.

Another object of the present invention is to provide a novel video game apparatus and a control method thereof, and a game program for setting an action restriction area to restrict an action of a player character in a virtual 3-dimension space.

The present invention is defined in the appended claims.

The objects and other objects, features, aspects and advantages of the present invention will become more apparent from the following detailed description of the present invention when taken in conjunction with the accompanying drawings.

### BRIEF DESCRIPTION OF THE DRAWINGS

Figure 1 is an illustrative view showing a game system of one embodiment of the present invention;
Figure 2 is a block diagram showing in detail a game machine of Figure 1 embodiment;
Figure 3 is an illustrative view showing one example of a memory map of a main memory in Figure 2;
Figure 4 is an illustrative view showing one example of a game screen for schematically describing a game of the embodiment;
Figure 5 is an illustrative view showing another example of the game screen for schematically describing the game of the embodiment;
Figure 6 is an illustrative view showing one example of a plane map texture including an action restriction area (graffiti);
Figure 7 is a flowchart showing an operation of Figure 1 embodiment;
Figure 8 is a flowchart showing an operation of an action restriction area process in Figure 7;
Figure 9 is a flowchart showing an operation of a rendering process in Figure 7; and
Figure 10 is an illustrative view showing one example of a rendering of the plane map texture.

### DETAILED DESCRIPTION OF THE PREFERRED EMBODIMENTS

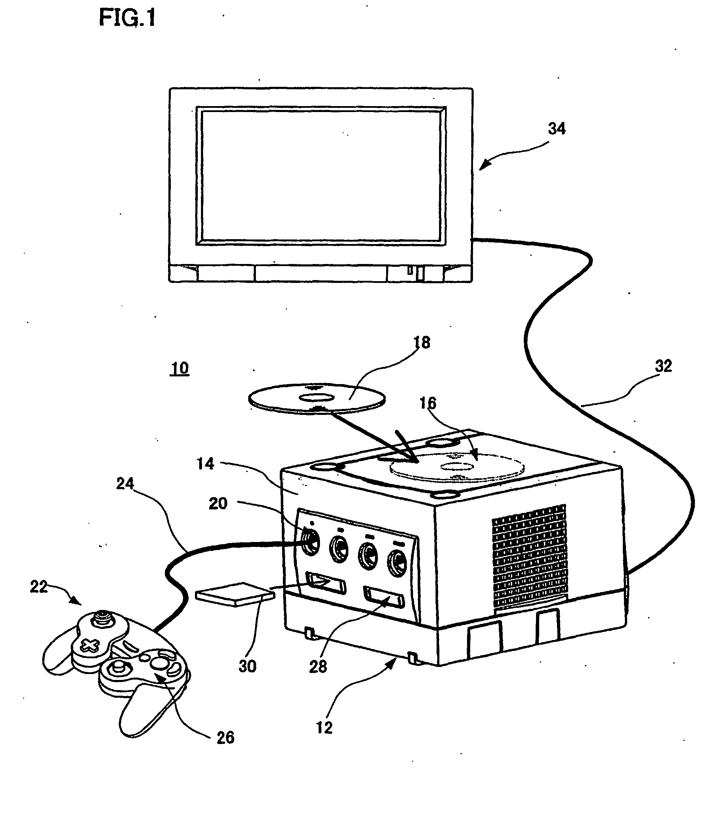

A video game system 10 of this embodiment shown in Figure 1 includes a video game machine (hereinafter, may simply be referred to as "game machine") 12. Although a power source is applied to the game machine 12, a general AC adapter (not shown) may be adopted thereto in this embodiment. The AC adapter is inserted into a standard wall socket for home use, and a power source for home use is converted into a low DC voltage signal suitable for driving the game machine 12. In another embodiment, a buttery may be utilized as the power source.

The game machine 12 includes an approximately cubic housing 14, and the housing 14 is provided with an optical disk drive 16 on an upper surface thereof. An optical disk 18 which is one example of an information storage medium stored with a game program is loaded on the optical disk drive 16. The housing 14 is provided with a plurality of connectors 20 (four in this embodiment) on a front surface thereof. These connectors 20 are for connecting a controller 22 to the game machine 12 by a cable 24 and can connect up to four controllers to the game machine 12 in this embodiment.

The controller 22 is provided with an operating means (control) 26 on upper, lower and side surfaces thereof. The operating means 26 includes, for example, two analog joysticks, one cross key, a plurality of button switches and so on. One analog joystick is utilized for inputting a moving direction and/or a moving speed or moving amount, and etc. of a player character (a moving image character operable by the controller 22 by a player) according to an amount of inclination and a direction of the stick. The other analog joystick is utilized for controlling movement of a virtual camera according to a direction of an inclination thereof. The cross key is utilized for instructing a moving direction of the player character in place of the analog joystick. The button switches are utilized for instructing movement of the player character, switching a point of view of the virtual camera in the 3-dimension image, adjusting the moving speed of the player character and so on. The button switches further control, for example, a menu selection and movement of a pointer or a cursor.

It is noted that the controller 22 is connected to the game machine 12 by the cable 24 in this embodiment. However, the controller 22 may be coupled to the game machine 12 via another method, for example, an electromagnetic wave (e.g., radio wave or infrared ray) in a wireless manner. Furthermore, detailed structure of the operating means of the controller 22 is, of course, not limited to the structure of the embodiment and can be arbitrarily changed or modified. For example, only one analog joystick may be utilized or no analog joystick may be utilized. The cross key may not be utilized.

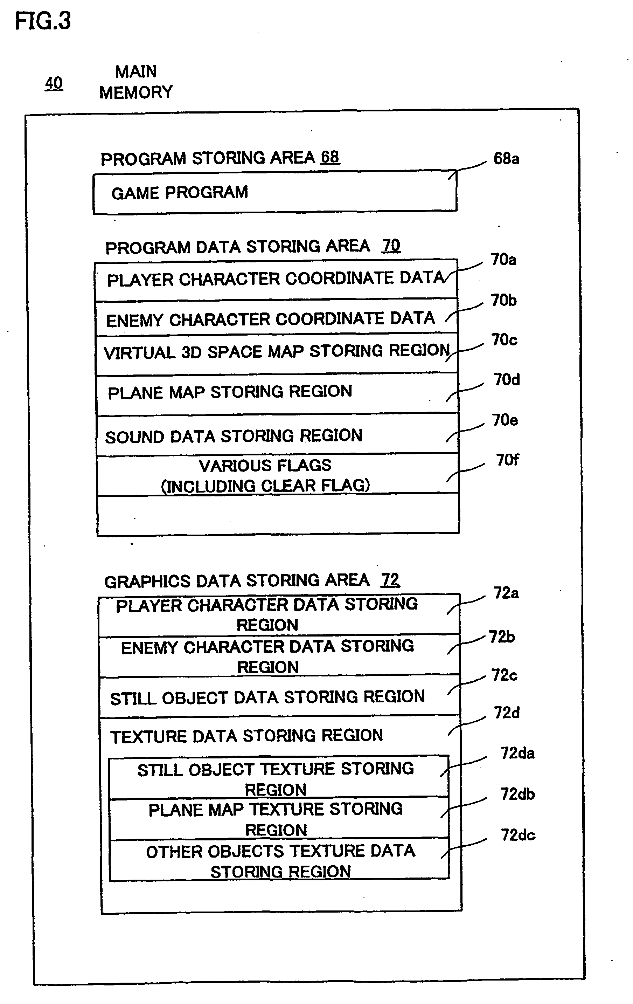

At least one (two in this embodiment) memory slot 28 is provided below the connectors 20 on the front surface of the housing 14 of the game machine 12. A memory card 30 is inserted to this memory slot 28. The memory card 30 is utilized for loading the game program and display data (see Figure 3) read from the optical disk 18 so as to temporarily store, or saving game data (i.e., result of the game) of the game that the player plays by utilizing the game system 10.

The housing 14 of the game machine 12 is, on a rear surface thereof, provided with an AV cable connector (not shown) with which a monitor 34 is connected to the game machine 12 through an AV cable 32. The monitor 34 is typically a color television receiver, and the AV cable 32 inputs a video signal from the game machine 12 to a video input terminal of the color television and applies a sound signal to a sound input terminal. Accordingly, a game image of a 3-dimension (3D) video game, for example, is displayed on the color television (monitor) 34, and a stereo game sound such as game music, sound effect and etc. is output from right and left speakers.

In the game system 10, a user or a game player turns on an electric power source of the game machine 12 in order to play a game (or other application), and then, selects a suitable optical disk 18 storing a video game (or other application intended to play), and loads the optical disk 18 on the disk drive 16 of the game machine 12. In response thereto, the game machine 12 starts to execute the video game or the other application on the basis of software stored in the optical disk 18. The user operates the controller 22 so as to apply an input to the game machine 12. For example, by operating any one of the operating means 26, the game or the other application is started. By moving another of the operating means 26, it is possible to move the moving image character (player character) toward different directions or to change the point of view of the user (camera position) in the 3-dimension (3D) game world.

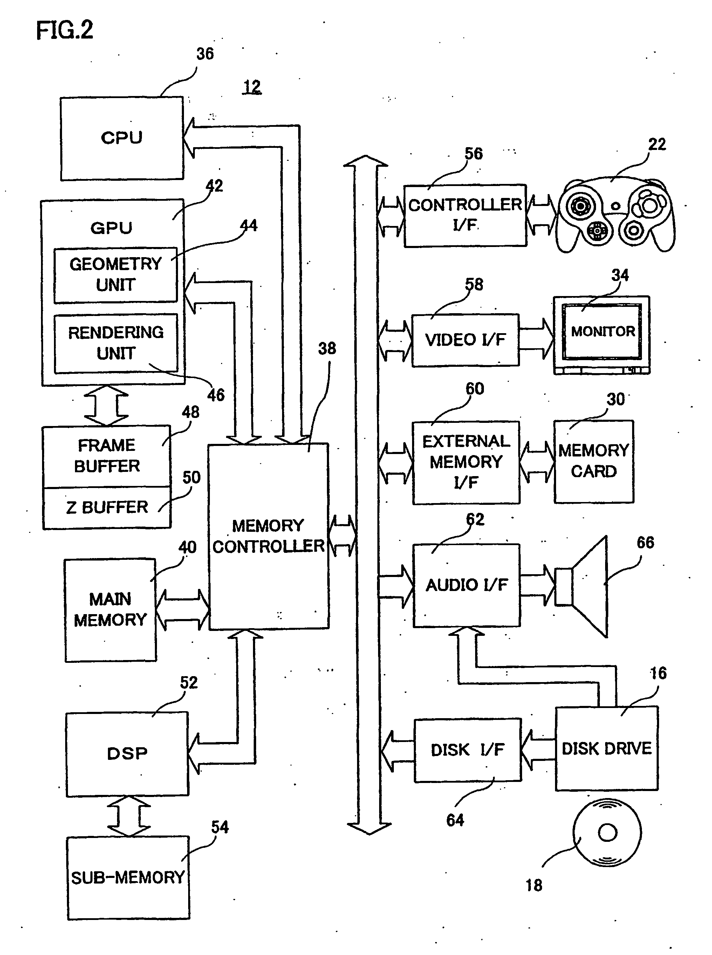

Figure 2 is a block diagram showing a configuration of the video game system 10 of Figure 1 embodiment. The video game machine 12 is provided with a central processing unit (hereinafter, may be referred to as "CPU") 36 for governing overall control of the game machine, and the CPU36 is connected with a memory controller 38 via a bus. The memory controller 38 mainly controls writing and reading of a main memory 40 connected via a bus under control of the CPU 36. The memory controller 38 is coupled with a GPU (Graphics Processing Unit) 42.

The GPU 42 is constructed by, for example, a single chip ASIC and receives a graphics command (an image-construction command) from the CPU 36 via the memory controller 38 and then, in response to the command, generates the 3-dimension (3D) game image by a geometry unit 44 and a rendering unit 46. Specifically, the geometry unit 44 performs a coordinate operation process such as rotation, movement, transformation and etc. of various kinds of characters and objects (which is formed by a plurality of polygons, and the polygon is a polygonal plane defined by at least 3 vertex coordinates) in a 3-dimension coordinates system. The rendering unit 46 pastes (performs a rendering) a texture (pattern image) on each of polygons of the various kinds of objects. Accordingly, 3-dimension image data to be displayed on the game screen is produced by the GPU 42, and the image data is rendered (stored) in a frame buffer 48. It is noted that data (primitive or polygon, texture and etc.) required to execute the image-construction command by the GPU 42 is obtained from the main memory 40 via the memory controller 38.

The frame buffer 48 is a memory for rendering (accumulating) one frame of image data, for example, of the raster scan monitor 34 and is rewritten by the GPU 42 at every one frame. A video I/F 58 described later reads the data stored in the frame buffer 48 through the memory controller 38, and whereby the 3D game image is displayed on the screen of the monitor 34. It is noted that a capacity of the frame buffer 48 has largeness corresponding to the number of pixels (or dots) of the screen to be displayed. For example, it has the number of pixels (storing positions or addresses) corresponding to the number of the pixels of the display or the monitor 34.

Furthermore, a Z buffer 50 has a storage capacity equal to the number of pixels (storing positions or addresses) corresponding to the frame buffer 48 X the number of bits of depth data per one pixel, and stores depth information or depth data (Z value) of dots corresponding to respective storing positions of the frame buffer 48.

It is noted that the frame buffer 48 and the Z buffer 50 may be constructed by a portion of the main memory 40.

The memory controller 38 is also connected to a sub-memory 54 via a DSP (Digital Signal Processor) 52. Accordingly, the memory controller 38 controls the writing and/or the reading of the sub-memory 54 in addition to the main memory 40.

The memory controller 38 is further connected to respective interfaces (I/F) 56, 58, 60, 62 and 64 by buses. The controller I/F 56 is an interface for the controller 22 and applies an operating signal or data of the operating means 26 of the controller 22 to the CPU 36 through the memory controller 38. The video I/F 58 accesses the frame buffer 48 to read the image data formed by the GPU 42 and then, applies the image signal or the image data (digital RGB pixel values) to the monitor 34 via the AV cable 32 (Figure 1). The external memory I/F 60 makes the memory card 30 (Figure 1) which is inserted to the front surface of the game machine 12 communicate to the memory controller 38. This allows the CPU 36 to write the data to the memory card 30 (Figure 1) or read the data from the memory card 30 via the memory controller 38. The audio I/F 62 receives audio data applied from the frame buffer 48 through the memory controller 38 or an audio stream read from the optical disk 18, and then applies an audio signal (sound signal) corresponding thereto to a speaker 66 of the monitor 34. It is noted that in a stereo sound, the speaker 66 is provided right and left at least one. The disk I/F 64 connects the disk drive 16 to the memory controller 38, and whereby the CPU 36 controls the disk drive 16. The disk drive 16 writes program data, texture data and etc. read from the optical disk 18 to the main memory 40 under control of the CPU 36.

Figure 3 shows a memory map of the main memory 40. The main memory 40 includes a program storing area 68, a program data storing area 70 and a graphics data storing area 72. The game program storing area 68 is stored with a game program 68a read from the optical disk 18 wholly at one time, or partially and sequentially.

The program data storing area 70 is similarly stored with program data read from the optical disk 18 wholly at one time, or partially and sequentially. The program data includes coordinates data of a model of a character or an object, for example. The program data storing area 70 includes a player character coordinate data storing region 70a for storing coordinate data of a character (player character) capable of being moved or rendered an arbitrary action within the game space by operating the controller 38 by the game player, and an enemy character coordinate data storing region 70b for storing coordinate data of an enemy character. It is noted that although the enemy character is one of non-player characters (character incapable of being operated or controlled by the game player), the non-player character may includes a non-player character except for the enemy character. The program data storing area 70 further includes a storing region 70c for storing a map (virtual 3-dimension space map) to display a virtual 3-dimension game space, a region 70d for storing a plane map showing a plane obtained by viewing from above the virtual 3-dimension game space, a region 70e for storing sound data of a game sound and a sound effect, and a region 70f for a various flags including, for example, a clear flag, and registers. The clear flag is set to "1" when graffiti (an action restriction area or obstacle area) described later is present in the game space and set to "0" when the graffiti becomes absent.

The graphics data storing area 72 is also stored with graphics data read from the optical disk 18 wholly at one time, or partially and sequentially. The graphics data is, for example, data relating to a rendering such as color, transparency and etc. The graphics data storing area 72 includes a storing region 72a for storing data such as a polygon of the above-described player character (polygon list and so on) and etc., a storing region 72b for storing data such as a polygon of the enemy character (polygon list and so on) and etc., a storing region 72c for storing data such as a polygon of the still object (wall object, land object and so on) and etc., and a storing region 72d for storing texture data. The texture data storing region 72d includes a storing region 72da for storing a still object texture to be pasted on each surface of the above-described still object, a storing region 72db for storing a plane map texture to be pasted on the above-described plane map, and a storing region 72dc for storing texture to be pasted on other objects or characters. The above-described plane map texture is a texture for pasting only after-mentioned graffiti on the plane map, includes, for example, a black graffiti pattern, and is renewed in real time as described later. In other words, the plane map texture is for eventually deciding RGB (color) to be specified at every pixel of the still object. On the other hand, the plane map texture is settable of transparency (α) at every pixel. By use of this, if α =1 (opaque) as to a portion subjected to graffiti, a color of the still object becomes black as graffiti at the portion of α =1. As described later, if the graffiti is erased, a portion of the still object is made α =0 (transparency), the black texture disappears, and whereby, a natural color of the still object is displayed. Of course, a process for directly rewriting the RGB data may be performed.

As a game content of this embodiment, when the player character moves in a town and etc. in the game space, a smudged portion or "graffiti portion" exists here and there. When the player character touches the graffiti portion, a contrivance such as suffering of damage, incapability of entering in the graffiti portion and etc. is performed. Accordingly, the graffiti portion limits the action of the player character and is called an "action restriction area" or an "obstacle area".

On the other hand, when the enemy character moves, since a movement locus is changed to the graffiti portion, the graffiti portion in which the player character is damaged is increased, and therefore, a range in which the player character can freely act becomes narrower.

It is noted that the player character can sprinkle water by utilizing a water pump and erase the graffiti, and when all the graffiti on the map is erased, the map or the stage means to be cleared.

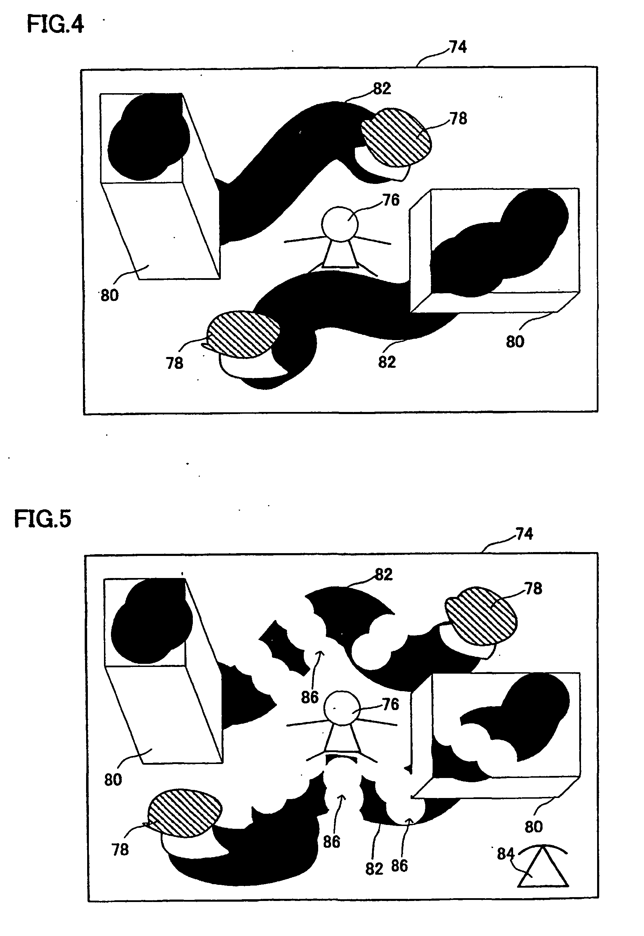

Herein, referring to Figure 4 to Figure 6, an outline of the video game machine of this embodiment is described. A game image shown in Figure 4, for example, is displayed on the monitor 34 shown in Figure 1. That is, a game space 74 is displayed as the virtual 3-dimension space in which a player character 76 is displayed. In relation to the player character 76, one or more enemy character 78 being the non-player character is displayed. An arbitrary number of still objects 80 such as land (floor), building, wall and etc. are displayed in the game space 74. In Figure 4, black graffiti 82 is displayed on a part of the still object 80. The graffiti 82 functions as the action restriction area with respect to the player character 76.

More specifically, when the player character 76 enters in the area, i.e., the graffiti 82, the player character 76 drains physical strength, for example and decreases a so-called life point (HP) in the game. Accordingly, as the game player, it is necessary to deal with the problems by letting the player character away from the graffiti 82 as soon as possible, erasing the graffiti 82 and so on.

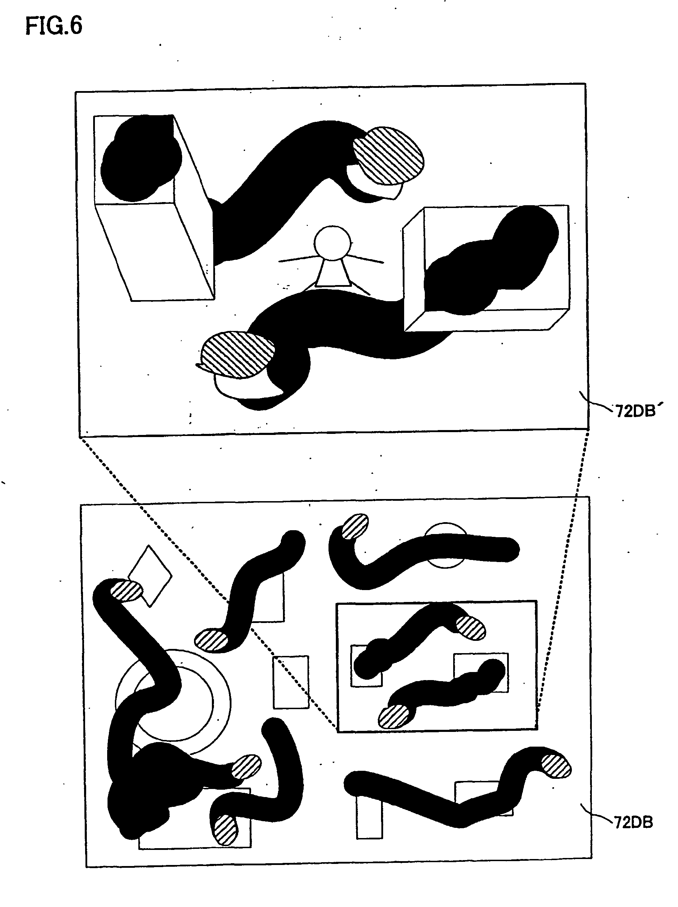

In this embodiment, when the game player operates the controller 22 so as to allow the player character to operate a pump 84 shown in Figure 5, it is possible to erase a part of the graffiti 82 as shown in Figure 5. In a graffiti cancelled portion 86, an action restriction with respect to the player character 76 is canceled.

It is noted that although a plane map texture stored in the plane map texture storing region 72db in Figure 3 has largeness so as to wholly cover the game space in the same manner as a texture 72DB shown in Figure 6, a part 72DB' of the texture is utilized in Figure 4 and Figure 5.

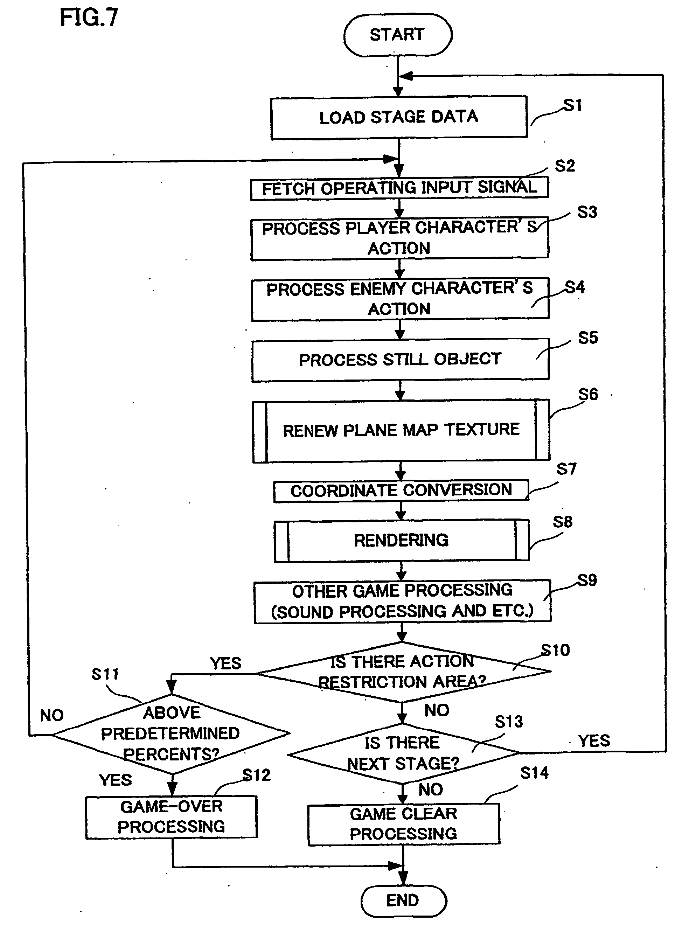

When playing a game, the optical disk 18 is set to the game machine 12 as described above. When the power is turned on, data is read from the optical disk 18, and a program and data required for a game map or a stage at this time are stored (loaded) in the main memory 40 as shown in Figure 3 in a first step S1 in Figure 7. Then, in the step S1, although not shown in detail, the CPU 36 reads from the graphics data storing area 72 of the main memory 40 a geography object (land object, building object, wall object and etc.), an item, the player character, the non-player character (enemy character) and data of the virtual camera and arranges the graphics data thereof in initial coordinates of the 3-dimension world coordinates system being the virtual 3-dimension game space. Accordingly, in the step S1, the game screen as shown in Figure 4 is displayed on the monitor 34 (Figure 1).

Then, the CPU 36 fetches an operating input signal from the controller 22 in a next step S2, and operates the player character 76 (Figure 4) in response to the operating input signal in a following step S3. For example, in a case the game player operates a direction instructing means (e.g., cross key or analog joystick) of the controller 22, the CPU 36 moves the player character to the direction within the game space in the step S3. For example, when a motion instructing means (e.g., A button) is operated, the player character is, for example, jumped in the step S3.

The CPU 36 executes a moving process of the enemy character in a following step S4 and, at the same time, executes a process of the still object in a next step S5.

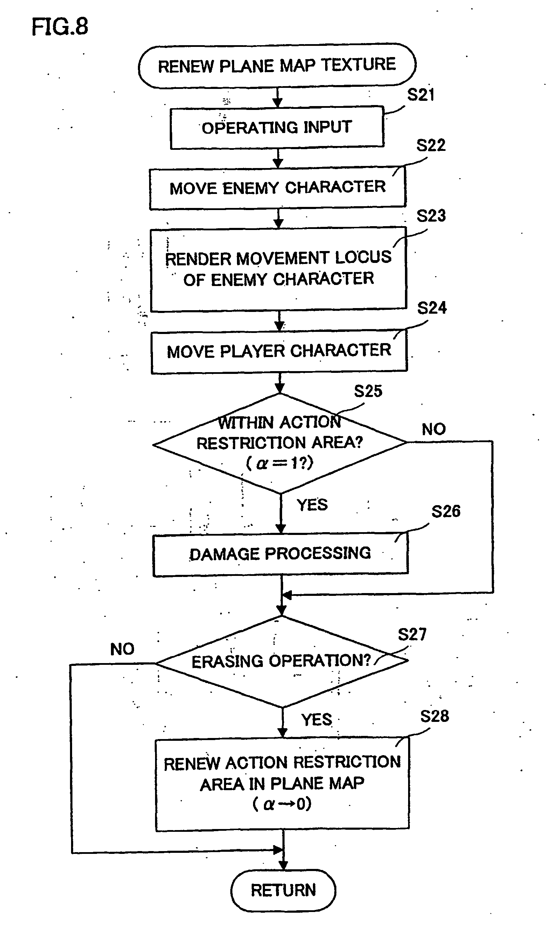

In a following step S6, the CPU 36 processes the action restriction area. The action restriction area is specifically shown in detail in Figure 8.

In a first step S21 in Figure 8, the CPU 36 fetches the operating input signal obtained by operating the operating means 26 (Figure 1) of the controller 22 via the controller I/F 56 and the memory controller 38. Then, the CPU 36 moves the enemy character in a following step S22, and renders a movement locus of the moved enemy character in a following step S23. Then, in a following step S24, the CPU 36 moves the player character 76 in response to the operating input signal from the controller. That is, the CPU 36 changes a position of the player character in response to the controller input in the world coordinates system in the step S24. The game player operates the analog joystick (or 3D joystick), for example, out of the operating means 26 (Figure 1) of the controller 22 in a case of changing the position of the player character 76 shown in Figure 4, and therefore, the CPU 36 receives data of a direction of an inclination and an amount of the inclination of the joystick from the controller I/F 56 and renews the position of the player character 76 on the basis of the data in the step S24.

At the same time, it is determined whether or not the player character 76 exists in the action restriction area in a step S25. More specifically, the CPU 36 determines whether or not the player character exists within the action restriction area by comparing the position of the player character at that time with a range of the coordinate position of the action restriction area (i.e., graffiti 82) shown in Figure 4.

If "YES" is determined in the step S25, the CPU 36 applies predetermined damage to the player character and executes processes such as decrease of the life point (HP) and etc. in a following step S26. In contrast, if "NO" is determined in the step S25, the process directly proceeds to a step S27.

In the step S27, the CPU 36 sees the operating input signal from the controller fetched in the step S21 and determines whether or not an instruction for erasing the action restriction area (graffiti) is included in the signal. If the erasing means is the pump 84 (Figure 5), the CPU 36 determines whether or not the game player operates the controller so that the pump is operable by the player character. If "NO" is determined in the step S27, the process directly returns to previous Figure 7 while if "YES" is determined, the plane map texture is renewed in response to the operation of the erasing means in a step S28.

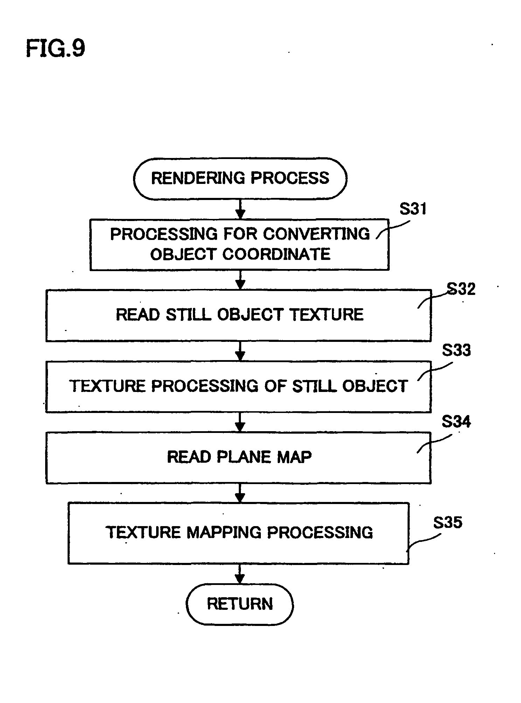

Returning to Figure 7, in a step S7, the CPU 36 renews the position of the virtual camera in the world coordinate system according to the position of the player character renewed in the step S24 (Figure 8). Then, in a step S8, a rendering process is executed. The step S8 is described in detail in Figure 9.

In a step S31, first, the CPU 36 converts the positions of the above-described geography object, the building object, the item, the player character, the enemy character and etc. into the 3-dimension camera coordinates system making the virtual camera as a reference, and converts the 3-dimension camera coordinates system into a 2-dimension projection plane coordinates system. Then, the CPU 36 reads a texture of the still object from the still object texture storing region 72da shown in Figure 3 in a step S32 and renders the still object texture in a step S33.

Furthermore, the plane map texture renewed in the above-described step S28 is read in a step S34, and the plane map texture is mapped on the previous still object texture in a step S35. Accordingly, by executing the step S35, the game screen shown in Figure 5 on which the erasing operation detected in the step S27 is reflected, i.e., in which a part of the graffiti is erased is displayed.

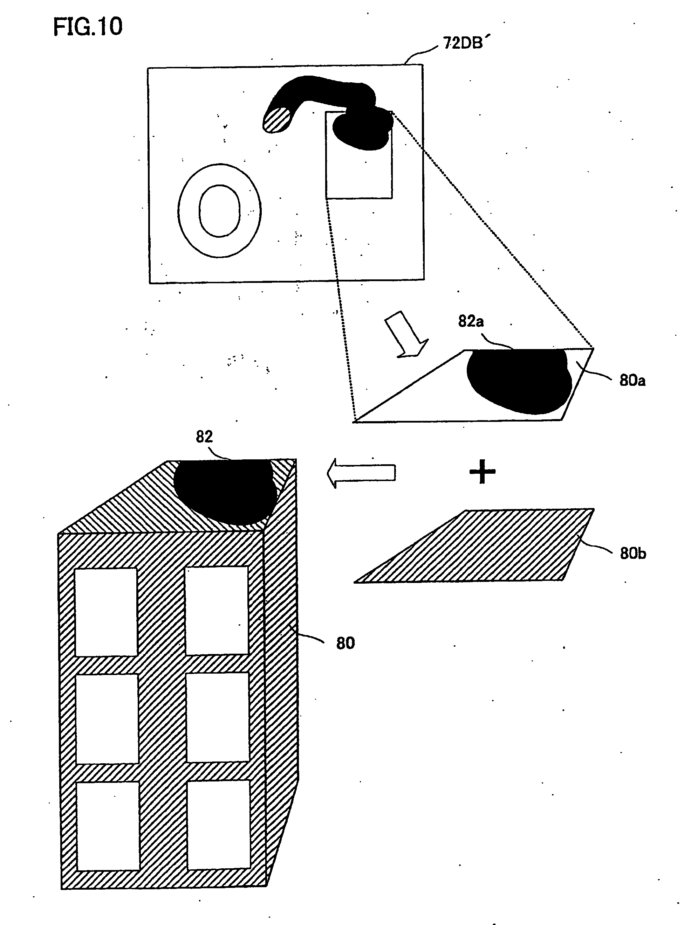

Referring to Figure 10, the plane map texture 72DB' shown in Figure 10 is read, and therein, a graffiti pattern 82a exists at a position or place corresponding to an upper surface 80a of the building 80. On the other hand, a natural texture of the building 80 is denoted by a reference numeral 82b. In this case, the graffiti pattern 82a included in the plane map texture 72DB' is overwritten, and the graffiti pattern 82 is rendered on the upper surface of the building.

Thereafter, the process returns to a step S9 shown in Figure 7 so as to execute a game process such as game music, sound effect, words and etc. Then, in a step S10, the CPU 36 determines whether or not the action restriction area, i.e., graffiti 82 shown in Figure 4 remains on the game screen. If the graffiti 82 remains, the CPU 36 calculates a ratio of a remaining graffiti 82 to the whole game screen (game space) 74 (Figure 4) and determines whether or not the ratio is more than a constant percentage in a following step S11.

If "NO" is determined in the step S11, i.e., a remaining ratio of the graffiti 82 is smaller than the constant percentage, the process returns to the previous step S2. However, in the embodiment which makes the game be over if the graffiti, i.e., the action restriction area 82 more than the constant percentage remains, a game-over process is performed in a step S12 and then, the process is ended.

If "NO" is determined in the previous step S10, the CPU 36 determines whether or not a next stage is present in a following step S13. If the next stage is present, the process returns to the first step S1 while if the next stage is absent, the game is cleared and a game clear process is executed in a step S14, and then, the process is ended.

Although the present invention has been described and illustrated in detail, it is clearly understood that the same is by way of illustration and example only and is not to be taken by way of limitation, the present invention being limited only by the terms of the appended claims.

## Claims

1. A video game apparatus of a type in which a virtual 3-dimension game is set real-time updatable 81 game image thereof displayed on a screen (34), the apparatus comprising:
an operating means (22) for allowing a player to perform game operation input;
a map data storing means (70d) for storing 2-dimension plane map data corresponding to a top plan view of a virtual 3-dimension game space to be displayed on a display screen of a monitor;
a player character generating means (36, 70a, 72a, S3) for generating a player character in said virtual 3-dimension space;
a non-player character generating means (36, 70b, 72b, S4) for generating a non-player character in said virtual 3-dimension space;
a plane map texture storing means (72db) for storing a plane map texture rendered on said 2-dimension plane map;
a setting means (36, 70d, 72d, S23) for setting and renewing an action restriction area in said plane map texture to restrict an action of said player character according to movement of said non-player character;
a canceling means (36, 70d, 72d, S28) for canceling and renewing at least a part of said action restriction area set in said plane map texture by said setting means in response to a predetermined action of said player character based on operating input from said operating means; and
a rendering means (36, 46, 72d, S8) the game image is real time and including for rendering said plane map texture, having a renewed action restriction area, on said virtual 2-dimension plane map in response to said setting means and said canceling means, the plane map texture being displayed overwritten on the game image

2. A video game apparatus according to claim 1, further comprising a clear determining means (36, 70d, S 10) for determining that a stage is cleared on the basis of non-existence of said latest action restriction area stored in said plane map texture.

3. A video game apparatus according to claim 1, further comprising a game-over determining means (36, 70d, S 11) for determining that a game is over on the basis that said latest action restriction area stored in said plane map texture exceeds a predetermined proportion.

4. A video game apparatus according to claim 1, further comprising a still object data generating means (36, 70c, S5) for generating still object data indicative of a shape of said still object and a still object texture storing means (72) for storing a still object texture, wherein said still object is displayed by mapping said still object texture on said still object data, and wherein
said rendering means includes a texture mapping means for mapping said still object texture and said plane map texture.

5. A video game apparatus according to claim 1, wherein said plane map texture storing means is settable of a transparency parameter, and
said action restriction area is set by said transparency parameter.

6. A control method of a video game in which a game player operates a player character in a virtual 3-dimension space a real-time updatable game image thereof being displayed on a display screen of a monitor, comprising the steps of:
(a) preparing a 2-dimension plane map corresponding to a top plan view of said virtual 3-dimension space and a plane map texture including an action restriction area which is rendered on said 2-dimension plane map and restricts an action of said player character;
(b) renewing said action restriction area of said plane map texture by moving a non-player character in said virtual 3-dimension space;
(c) renewing said action restriction area of said plane map texture by a predetermined movement of said player character in response to an operation of said game player; and
(d) changing in real time said action restriction area displayed in said virtual 3-dimension space by rendering the game image is real time, including rendering said plane map texture having a renewed action restriction area in said 2-dimension plane map, displaying the plane map texture overwritten on the game image.

7. A control method of a video game according to claim 6, wherein said step (b) renews said action restriction area by a transparency parameter of said plane map texture.

8. A game program for operation on a video game apparatus, of a type in which a virtual 3-dimension game is set and real-time updatable game image thereof displayed wherein the apparatus comprises an operating means for allowing a player to perform game operation input, a map data storing means for storing 2-dimension plane map data corresponding to a top plan view of a virtual 3-dimension game space to be displayed on a display screen of a monitor, and a plane map texture storing means for storing a plane map texture rendered on said 2-dimension plane map, wherein a computer of said game apparatus is caused to execute the following steps:
a player character generating step (S3) of generating a player character in said virtual 3-dimension space;
a non-player character generating step (S4) of generating a non-player character in said virtual 3-dimension space;
a setting step (S23) of setting and renewing an action restriction area in said plane map texture to restrict an action of said player character according to movement of said non-player character;
a canceling step (S28) of canceling and renewing at least a part of said action restriction area set in said plane map texture by said setting step in response to a predetermined action of said player character based on operation input from said operating means; and
a rendering step (88) of rendering the game image in real time and including said plane map texture, having a renewed action restriction area, on said virtual 2-dimension map in response to said setting step and said canceling step, the plane map texture being displayed overwritten on the game image.

9. A game program according to claim 8, wherein
said game apparatus further includes a still object data generating means for generating still object data indicative of a shape of said still object, and a still object texture storing means for storing a still object texture, and said computer displays said still object by mapping said still object texture on said still object data, and wherein
said still object texture and said plane map texture are mapped with each other in said rendering step.

10. A game program according to claim 8, wherein said plane map texture storing means is settable of a transparency parameter, and said action restriction area setting step is set by said transparency parameter.

## Patentansprüche

1. Videospiel-Gerät von einer Art, in der ein virtuelles 3-dimensionales Spiel konfiguriert und ein aktualisierbares Echtzeit-Spiel-Bild desselben auf einem Bildschirm (34) angezeigt wird, wobei das Gerät umfasst:
eine Bedienungseinrichtung (22), um es einem Spieler zu erlauben, eine Spiel-Bedienungseingabe auszuführen;
eine Abbildungsdatenspeichereinrichtung (70d), um 2-dimensionale Ebenenabbildungsdaten zu speichern, die einer Oberseitenansicht eines virtuellen 3-dimensionalen Spiel-Raums entsprechen, der auf einem Anzeigebildschirm eines Monitors angezeigt werden soll;
eine Spielerfigurerzeugungseinrichtung (36, 70a, 72a, S3), um in dem virtuellen 3-dimensionalen Raum eine Spielerfigur zu erzeugen;
eine Nichtspielerfigurerzeugungseinrichtung (36, 70b, 72b, S4), um in dem virtuellen 3-dimensionalen Raum eine Nichtspielerfigur zu erzeugen;
eine Ebenenabbildungstexturspeichereinrichtung (72db), um eine auf der 2-dimensionalen Ebenenabbildung generierte Ebenenabbildungstextur zu speichern;
eine Konfigurierungseinrichtung (36, 70d, 72d, S23), um in der Ebenenabbildungstextur einen Tätigkeitsbeschränkungsbereich zu konfigurieren und zu erneuern, um eine Tätigkeit der Spielerfigur gemäß einer Bewegung der Nichtspielerfigur einzuschränken;
eine Aufhebungseinrichtung (36, 70d, 72d, S28), um mindestens einen Teil des von der Konfigurierungseinrichtung in der Ebenenabbildungstextur konfigurierten Tätigkeitsbeschränkungsbereichs ansprechend auf eine vorbestimmte Tätigkeit der Spielerfigur basierend auf einer Bedienungseingabe aus der Bedienungseinrichtung aufzuheben und zu erneuern; und
eine Generierungseinrichtung (36, 46, 72d, S8), um ansprechend auf die Konfigurierungseinrichtung und die Aufhebungseinrichtung auf der virtuellen 2-dimensionalen Ebenenabbildung das Spiel-Bild in Echtzeit und einschließlich der Ebenenabbildungstextur zu generieren, die einen erneuerten Tätigkeitsbeschränkungsbereich aufweist, wobei die Ebenenabbildungstextur überschrieben auf dem Spiel-Bild angezeigt wird.

2. Videospiel-Gerät nach Anspruch 1, weiter umfassend eine Lösch-Feststellungseinrichtung (36, 70d, S10), um auf der Grundlage des Nichtvorhandenseins des letzten Tätigkeitsbeschränkungsbereichs, der in der Ebenenabbildungstextur gespeichert ist, festzustellen, dass eine Stufe gelöscht wird.

3. Videospiel-Gerät nach Anspruch 1, weiter umfassend eine Spielende-Feststellungseinrichtung (36, 70d, S11), um auf der Grundlage, dass der in der Ebenenabbildungstextur gespeicherte letzte Tätigkeitsbeschränkungsbereich einen vorbestimmten Anteil überschreitet, festzustellen, dass das Spiel vorüber ist.

4. Videospiel-Gerät nach Anspruch 1, weiter umfassend eine Standobjektdatenerzeugungseinrichtung (36, 70c, S5), um Standobjektdaten zu erzeugen, die für eine Gestalt des Standobjekts bezeichnend sind, und eine Standobjekttexturspeichereinrichtung (72), um eine Standobjekttextur zu speichern, wobei das Standobjekt angezeigt wird, indem die Standobjekttextur auf den Standobjektdaten abgebildet wird, und wobei
die Generierungseinrichtung eine Texturabbildungseinrichtung einschließt, um die Standobjekttextur und die Ebenenabbildungstextur abzubilden.

5. Videospiel-Gerät nach Anspruch 1, bei dem die Ebenenabbildungstexturspeichereinrichtung für einen Transparenzparameter konfigurierbar ist, und
der Tätigkeitsbeschränkungsbereich durch den Transparenzparameter konfiguriert wird.

6. Steuerverfahren für ein Videospiel, bei dem ein Spieler eine Spielerfigur in einem virtuellen 3-dimensionalen Raum bedient, wobei ein aktualisierbares Echtzeit-Spiel-Bild desselben auf einem Anzeigebildschirm eines Monitors angezeigt wird, umfassend die Schritte:
(a) Vorbereiten einer 2-dimensionalen Ebenenabbildung, die einer Oberseitenansicht des virtuellen 3-dimensionalen Raums entspricht, und einer Ebenenabbildungstextur, die einen Tätigkeitsbeschränkungsbereich einschließt, der auf der 2-dimensionalen Ebenenabbildung generiert wird und eine Tätigkeit der Spielerfigur einschränkt;
(b) Erneuern des Tätigkeitsbeschränkungsbereichs der Ebenenabbildungstextur durch Bewegen einer Nichtspielerfigur in dem virtuellen 3-dimensionalen Raum,
(c) Erneuern des Tätigkeitsbeschränkungsbereichs der Ebenenabbildungstextur durch eine vorbestimmte Bewegung der Spielerfigur ansprechend auf eine Bedienung der Spielerfigur; und
(d) Verändern des in dem virtuellen 3-dimensionalen Raum angezeigten Tätigkeitsbeschränkungsbereichs in Echtzeit durch Generieren des Spiel-Bildes in Echtzeit, einschließlich Generieren der Ebenenabbildungstextur, die einen erneuerten Tätigkeitsbeschränkungsbereich aufweist, in der 2-dimensionalen Ebenenabbildung, Anzeigen der Ebenenabbildungstextur überschrieben auf dem Spiel-Bild.

7. Steuerverfahren für ein Videospiel nach Anspruch 6, bei dem der Schritt (b) den Tätigkeitsbeschränkungsbereich durch einen Transparenzparameter der Ebenenabbildungstextur erneuert.

8. Spiel-Programm zum Betrieb auf einem Videospiel-Gerät von einer Art, in der ein virtuelles 3-dimensionales Spiel konfiguriert und ein aktualisierbares Echtzeit-Spiel-Bild desselben angezeigt wird, wobei das Gerät umfasst: eine Bedienungseinrichtung, um es einem Spieler zu erlauben, eine Spiel-Bedienungseingabe vorzunehmen, eine Abbildungsdatenspeichereinrichtung, um 2-dimensionale Ebenenabbildungsdaten zu speichern, die einer Oberseitenansicht eines virtuellen 3-dimensionalen Spiel-Raums entsprechen, der auf einem Anzeigebildschirm eines Monitors angezeigt werden soll, und eine Ebenenabbildungstexturspeichereinrichtung, um eine auf der 2-dimensionalen Ebenenabbildung generierte Ebenenabbildungstextur zu speichern, wobei bewirkt wird, dass ein Rechner des Spiel-Geräts die folgenden Schritte ausführt:
einen Spielerfigurerzeugungsschritt (S3) eines Erzeugens einer Spielerfigur in dem virtuellen 3-dimensionalen Raum;
einen Nichtspielerfigurerzeugungsschritt (S4) eines Erzeugens einer Nichtspielerfigur in dem virtuellen 3-dimensionalen Raum;
einen Konfigurierungsschritt (S23) eines Konfigurierens und Erneuerns eines Tätigkeitsbeschränkungsbereichs in der Ebenenabbildungstextur, um eine Tätigkeit der Spielerfigur gemäß einer Bewegung der Nichtspielerfigur einzuschränken;
einen Aufhebungsschritt (S28) eines Aufhebens und Erneuerns von mindestens einem Teil des durch den Konfigurierungsschritt in der Ebenenabbildungstextur konfigurierten Tätigkeitsbeschränkungsbereichs ansprechend auf eine vorbestimmte Tätigkeit der Spielerfigur basierend auf einer Bedienungseingabe aus der Bedienungseinrichtung; und
einen Generierungsschritt (S8) eines Generierens des Spiel-Bildes in Echtzeit und einschließlich der Ebenenabbildungstextur, die einen erneuerten Tätigkeitsbeschränkungsbereich aufweist, auf der virtuellen 2-dimensionalen Abbildung ansprechend auf den Konfigurierungsschritt und den Aufhebungsschritt, wobei die Ebenenabbildungstextur überschrieben auf dem Spiel-Bild angezeigt wird.

9. Spiel-Programm nach Anspruch 8, bei dem
das Spiel-Gerät weiter eine Standobjektdatenerzeugungseinrichtung einschließt, um Standobjektdaten zu erzeugen, die für eine Gestalt des Standobjekts bezeichnend sind, sowie eine Standobjekttexturspeichereinrichtung, um eine Standobjekttextur zu speichern, und der Rechner das Standobjekt anzeigt, indem er die Standobjekttextur auf den Standobjektdaten abbildet, und wobei
die Standobjekttextur und die Ebenenabbildungstextur in dem Generierungsschritt miteinander abgebildet werden.

10. Spiel-Programm nach Anspruch 8, bei dem die Ebenenabbildungstexturspeichereinrichtung für einen Transparenzparameter konfigurierbar ist, und der Tätigkeitsbeschränkungsbereichskonfigurierungsschritt durch den Transparenzparameter konfiguriert wird.

## Revendications

1. Appareil de jeu vidéo d'un type dans lequel un jeu virtuel en 3 dimensions est réglée pour être mise à jour en temps réel et dont l'image de jeu pouvant être mise à jour en temps réel est affichée sur un écran (34), l'appareil comprenant :
◆ un moyen d'exploitation (22) pour permettre au joueur d'entrer des opérations de jeu ;
◆ un moyen d'enregistrement de données cartographiques (70d) pour enregistrer des données de carte plane en 2 dimensions correspondant à une vue en plan de dessus d'un espace de jeu virtuel en 3 dimensions à afficher sur un écran d'affichage d'un moniteur ;
◆ un moyen de création de personnage joueur (36, 70a, 72a, S3) pour créer un personnage joueur dans ledit espace virtuel en 3 dimensions ;
◆ un moyen de création de personnage non joueur (36, 70b, 72b, S4) pour créer un personnage non joueur dans ledit espace virtuel en 3 dimensions ;
◆ un moyen d'enregistrement de texture de carte plane (72db) pour enregistrer une texture de carte plane reproduite sur ladite carte plane en 2 dimensions ;
◆ un moyen de réglage (36, 70d, 72d, S23) pour régler et renouveler une zone de restriction d'action dans ladite texture de carte plane pour restreindre une action dudit personnage joueur selon le mouvement dudit personnage non joueur ;
◆ un moyen d'annulation (36, 70d, 72d, S28) pour annuler et renouveler au moins une partie de ladite zone de restriction d'action dans ladite texture de carte plane par ledit moyen de réglage en réponse à une action prédéterminée dudit personnage joueur en fonction d'une entrée d'opération à partir dudit moyen d'exploitation ; et
◆ un moyen de reproduction (36, 46, 72d, S8) pour reproduire l'image de jeu en temps réel et comprenant ladite texture de carte plane, ayant une zone de restriction d'action renouvelée, sur ladite carte plane virtuelle en 2 dimensions en réponse audit moyen de réglage et audit moyen d'annulation, la texture de carte plane étant affichée superposée sur l'image de jeu.

2. Appareil de jeu vidéo selon la revendication 1, comprenant en outre un moyen de détermination de fin d'étape (36, 70d, S10) pour déterminer qu'une étape est terminée sur la base de la non existence de ladite dernière zone de restriction d'action enregistrée dans la texture de carte plane.

3. Appareil de jeu vidéo selon la revendication 1, comprenant en outre un moyen de détermination de fin du jeu (36, 70d, S11) pour déterminer qu'un jeu est terminé sur la base du fait que ladite dernière zone de restriction d'action enregistrée dans ladite texture de carte plane dépasse une proportion prédéterminée.

4. Appareil de jeu vidéo selon la revendication 1, comprenant en outre un moyen de création de données d'objet fixe (36, 70c, S5) pour créer des données d'objet fixe indiquant une forme dudit objet fixe et un moyen d'enregistrement de texture d'objet fixe (72) pour enregistrer une texture d'objet fixe, dans lequel ledit objet fixe est affiché en cartographiant ladite texture d'objet fixe sur lesdites données d'objet fixe, et dans lequel ledit moyen de reproduction comprend un moyen de cartographie de texture pour cartographier ladite texture d'objet fixe et ladite texture de carte plane.

5. Appareil de jeu vidéo selon la revendication 1, dans lequel un paramètre de transparence peut être réglé dans le moyen d'enregistrement de texture de carte plane et ladite zone de restriction d'action est réglée par ledit paramètre de transparence.

6. Procédé de commande d'un jeu vidéo dans lequel un joueur de jeu dirige un personnage joueur dans un espace virtuel en 3 dimensions, dont une image de jeu pouvant être mise à jour en temps réel est affichée sur un écran d'affichage d'un moniteur, comprenant les étapes consistant à :
(a) préparer une carte plane en 2 dimensions correspondant à une vue en plan de dessus dudit espace virtuel en 3 dimensions et une texture de carte plane comprenant une zone de restriction d'action qui est reproduite sur ladite carte plane en 2 dimensions et restreint une action dudit personnage joueur ;
(b) renouveler ladite zone de restriction d'action de ladite texture de carte plane en déplaçant un personnage non joueur dans ledit espace en 3 dimensions ;
(c) renouveler ladite zone de restriction d'action de ladite texture de carte plane par un mouvement prédéterminé dudit personnage joueur en réponse à une opération dudit joueur de jeu ; et
(d) modifier en temps réel ladite zone de restriction d'action affichée dans ledit espace en 3 dimensions en reproduisant l'image de jeu en temps réel, y compris en reproduisant ladite texture de carte plane ayant une zone de restriction d'action renouvelée dans ladite carte plane en 2 dimensions, afficher la texture de carte plane superposée sur l'image de jeu.

7. Procédé de commande d'un jeu vidéo selon la revendication 6, dans lequel l'étape (b) renouvelle ladite zone de restriction d'action par un paramètre de transparence de ladite texture de carte plane.

8. Programme de jeu destiné à être exploité sur un appareil de jeu vidéo d'un type dans lequel un jeu virtuel en 3 dimensions est intégré et dont l'image de jeu pouvant être mise à jour en temps réel est affichée, dans lequel l'appareil comprend un moyen d'exploitation pour permettre à un joueur d'entrer des opérations de jeu, un moyen d'enregistrement de données carto-graphiques pour enregistrer des données de carte plane en 2 dimensions correspondant à une vue en plan de dessus d'un espace de jeu virtuel en 3 dimensions à afficher sur un écran d'affichage d'un moniteur, et un moyen d'enregistrement de texture de carte plane pour enregistrer une texture de carte plane reproduite sur ladite carte plane à 2 dimensions, dans lequel un calculateur dudit appareil de jeu est amené à exécuter les étapes suivantes :
◆ une étape de création de personnage joueur (S3) consistant à créer un personnage joueur dans ledit espace virtuel en 3 dimensions ;
◆ une étape de création de personnage non joueur (S4) consistant à créer un personnage non joueur dans ledit espace virtuel en 3 dimensions ;
◆ une étape de réglage (S23) consistant à régler et à renouveler une zone de restriction d'action dans ladite texture de carte plane pour restreindre une action dudit personnage joueur selon le mouvement dudit personnage non joueur ;
◆ une étape d'annulation (S28) consistant à annuler et à renouveler au moins une partie de ladite zone de restriction d'action réglée dans ladite texture de carte plane par ledit moyen de réglage en réponse à une action prédéterminée dudit personnage joueur en fonction d'une entrée d'opération à partir dudit moyen d'exploitation ; et
◆ une étape de reproduction (S8) consistant à reproduire l'image de jeu en temps réel et y compris ladite texture de carte plane, ayant une zone de restriction d'action renouvelée, sur ladite carte plane virtuelle en 2 dimensions en réponse à ladite étape de réglage et à ladite étape d'annulation, la texture de carte plane étant affichée superposée sur l'image de jeu.

9. Programme de jeu selon la revendication 8, dans lequel :
◆ ledit appareil de jeu comprend en outre un moyen de création de données d'objet fixe pour créer des données d'objet fixe indiquant une forme dudit objet fixe et un moyen d'enregistrement de texture d'objet fixe pour enregistrer une texture d'objet fixe, et lequel calculateur affiche ledit objet fixe en cartographiant ladite texture d'objet fixe sur lesdites données d'objet fixe, et dans lequel
◆ ladite texture d'objet fixe et ladite texture de carte plane sont cartographiées ensemble dans ladite étape de reproduction.

10. Programme de jeu selon la revendication 8, dans lequel un paramètre de transparence peut être réglé dans le moyen d'enregistrement de la texture de carte plane, et ladite étape de réglage de zone de restriction d'action est réglée par un paramètre de transparence.
